# EUROPÄISCHE PATENTSCHRIFT

(11) **EP 2 900 389 B1**
(45) Veröffentlichungstag und Bekanntmachung des Hinweises auf die Patenterteilung: **27.04.2016**
(21) Anmeldenummer: 13737579.6
(22) Anmeldetag: 08.07.2013
(51) Int. Cl.: B05C 5/02, H01M 4/04

(54) **SCHALTBARES SCHLITZVENTIL FÜR EINE BESCHICHTUNGSANLAGE, BESCHICHTUNGSANLAGE UND BESCHICHTUNGSVERFAHREN**
SWITCHABLE SLOT VALVE FOR A COATING SYSTEM, COATING SYSTEM AND COATING METHOD
VALVE À FENTE CONNECTABLE POUR INSTALLATION D'APPLICATION DE REVÊTEMENT, INSTALLATION D'APPLICATION DE REVÊTEMENT ET PROCÉDÉ D'APPLICATION DE REVÊTEMENT

(30) Priorität: 27.09.2012 DE 102012217682
(43) Veröffentlichungstag der Anmeldung: 05.08.2015
(73) Patentinhaber: VOLKSWAGEN VARTA Microbattery Forschungsgesellschaft mbH & Co. KG, 73479 Ellwangen Jagst (DE)
(72) Erfinder: HUTH, Andreas, 73479 Ellwangen (DE); SEKLER, Robert, 73479 Ellwangen (DE)
(74) Vertreter: Patentanwaltskanzlei Cartagena
(86) Internationale Anmeldenummer: PCT/EP2013/064394
(87) Internationale Veröffentlichungsnummer: WO 2014/048599

(56) Entgegenhaltungen:
- WO-A1-2004/069519
- DE-A1-102010 017 965
- GB-A- 564 557
- US-A1- 2007 119 368

## Beschreibung

### Anwendungsgebiet und Stand der Technik

Die Erfindung betrifft ein schaltbares Auslassventil für eine Beschichtungsanlage zur Steuerung der Abgabe eines pastösen Beschichtungsmaterials. Die Erfindung betrifft darüber hinaus auch eine Beschichtungsanlage mit einem schaltbaren Schlitzventil sowie ein Verfahren zum Beschichten von Oberflächen.

Aus dem Stand der Technik sind gattungsgemäße schaltbare Schlitzventile für Beschichtungsanlagen bekannt., wie z.B. ins DE102010017965 oder US6174372. Derartige Ventile weisen in einem Ventilgrundkörper eine in einer Ventilerstreckungsrichtung ausgerichtete Ventilbohrung auf, in die ein Zufuhrkanal einmündet und aus der ein Düsenkanal zur Verbindung mit einer Schlitzdüse der Beschichtungsanlage herausführt. In der Ventilbohrung eines bekannten Schlitzventils ist eine Ventilsteuerstange angeordnet, die um eine in Ventilerstreckungsrichtung erstreckte Drehachse drehbar in der Ventilbohrung gelagert ist und die von einem Ventilkanal durchsetzt ist, der über einen sich axial entlang einer Außenseite der Ventilsteuerstange erstreckten Kanaleinlass und einen ebensolchen gegenüberliegenden Kanalauslass verfügt, die über einen die Ventilsteuerstange durchsetzten Ventilkanal miteinander verbunden sind.

Dabei kann bei diesen bekannten Schlitzventilen die Ventilsteuerstange zwischen einer Durchlassstellung und einer Schlitzstellung durch einen Motor gedreht werden. In der Durchlassstellung ist die Ventilsteuerstange derart angeordnet, dass das durch den Zufuhrkanal zugeführte Beschichtungsmaterial durch den Kanaleinlass in den Ventilkanal gelangen kann und von dort durch den Kanalauslass in den Düsenkanal, von wo es bestimmungsgemäß der Schlitzdüse der Beschichtungsanlage zugeführt wird. In der Schließstellung ist dagegen der Düsenkanal vom Zufuhrkanal durch die Ventilsteuerstange isoliert, so dass die Ausbringung von Beschichtungsmaterial unterbrochen ist.

Zur Lagerung der Ventilsteuerstange in der Ventilbohrung weist die Ventilsteuerstange an ihrer Außenseite Lagerflächen auf, die im Bereich von zwei Teilumfängen der Ventilsteuerstange zwischen dem Kanaleinlass und dem Kanalauslass zum Zwecke der Lagerung an der Umfangsfläche der Ventilbohrung anliegen. Da die Ventilsteuerstange drehbar ist, verbleibt zwischen diesen Lagerflächen und der inneren Umfangsfläche der Ventilbohrung im Anlagebereich ein Lagerspalt von maximal 100 µm.

Gattungsgemäße Schlitzventile dienen der gezielten Steuerung des Austrags des Beschichtungsmaterials durch eine Schlitzdüse. Sie sind zu diesem Zweck der Schlitzdüse vorgeschaltet und gestatten es, durch Drehung der Ventilsteuerstange die Zufuhr des Beschichtungsmaterials zur Schlitzdüse zeitweise zu unterbrechen. Dies wird insbesondere genutzt, um alternierend Beschichtungsmaterial durch die Schlitzdüse hindurch abzugeben und die Abgabe zu unterbrechen.

Gattungsgemäße Beschichtungsanlagen mit gattungsgemäßen Schlitzventilen finden insbesondere zur Herstellung von Batterien Verwendung. Sie dienen in diesem Kontext dem Ausbringen eines pastösen Beschichtungsmaterials, das insbesondere elektrochemisch aktive Partikel enthält wie beispielsweise Graphitpartikel, in Form einer dünnen Schicht. Insbesondere kann diese Schicht als Elektrodenschicht unmittelbar auf einem geeigneten Kollektor der Batterie aufgebracht werden. Unter einer Beschichtung im Sinne der Erfindung wird jedoch auch die temporäre Aufbringung auf einem Trägersubstrat wie beispielsweise einer Walze oder einem flächigen Trägersubstrat verstanden, von dem aus bestimmungsgemäß die aus dem Beschichtungsmaterial gebildete Schicht in späteren Produktionsschritten wieder abgenommen wird, beispielsweise zur dann vorgesehenen Aufbringung auf ein Kollektorband.

Neben der Ausbringung eines Beschichtungsmaterials mit elektrochemisch wirkenden Partikeln zur Herstellung einer Batterie können derartige Beschichtungsanlagen auch Verwendung finden, um hierdurch eine elektrokatalytische Schicht einer Brennstoffzelle herzustellen. In diesem Fall können insbesondere Beschichtungsmaterialien verarbeitet werden, die als elektrochemisch aktive Partikel Katalysatorpartikel (Edelmetalle, Raney-Nickel, Wolframcarbid, Molybdänsulfide, Wolframsulfide oder ähnliche geeignete Materialien) enthalten, die die kalte Verbrennung von Brennstoffen wie Wasserstoff oder Methanol katalysieren können.

Bei gattungsgemäßen Beschichtungsanlagen ist der Schlitzdüse üblicherweise ein Pastenreservoir vorgeschaltet, aus dem das Beschichtungsmaterial dem Schlitzventil und der nachgeschalteten Schlitzdüse zugeführt wird. Dabei sind sowohl Gestaltungen denkbar, bei denen das Pastenreservoir selbst druckbeaufschlagt ist, um das Beschichtungsmaterial in Richtung des Schlitzventils zu drücken, als auch solche Gestaltungen, bei denen ein separates motorisch betriebenes Fördermittel wie beispielsweise eine Pumpe zwischen Pastenreservoir und Schlitzventil geschaltet ist.

Als Schlitzventil im Sinne der Erfindung wird ein Ventil verstanden, bei dem der Zufuhrkanal, der Düsenkanal sowie der die Ventilsteuerstange durchsetzende Ventilkanal in einer Dimension quer zur Förderrichtung eine deutlich größere Erstreckung als in der hierzu orthogonalen und ebenfalls quer zur Förderrichtung erstreckten Dimension. Die Erstreckung der jeweiligen Kanäle in Ventilerstreckungsrichtung ist gemäß der Definition eines Schlitzventils gemäß dieser Erfindung zumindest um Faktor 4 größer als die Erstreckung quer zur Ventilerstreckungsrichtung. Bezüglich der Ventilsteuerstange ist vorgesehen, dass diese eine Länge in Ventilerstreckungsrichtung aufweist, entlang derer sie vom Ventilkanal durchsetzt ist, die mindestens vier Mal so groß ist wie der mittlere Radius der Ventilsteuerstange. Vorzugsweise und zumeist ist die Länge der Ventilsteuerstange, entlang derer sie vom Ventilkanal durchsetzt ist, um einen größeren Faktor größer als der Radius der Ventilsteuerstange, vorzugsweise mindestens um Faktor 10.

Das genannte Verhältnis zwischen Radius und Durchmesser der Ventilsteuerstange einerseits und deren Länge andererseits, führt in der Praxis zu Schwierigkeiten. So wurde festgestellt, dass Beschichtungsmaterial, das in den engen Spalt zwischen innerem Umfang der Ventilbohrung und die Lagerfläche der Ventilsteuerstange gelangt, mit zunehmender Betriebsdauer die zum Verstellen des Schlitzventils erforderlichen Momente stark ansteigen lässt.

Dies ist dadurch bedingt, dass viele Beschichtungsmaterialien und insbesondere die im Zusammenhang mit der Batterieherstellung verwendeten Beschichtungsmaterialien dazu neigen, ihre Viskosität bei hoher Scherbelastung abhängig vom Maß und der Zeit der Scherung deutlich zu erhöhen (Reopexes Verhalten). Je länger Reste des Beschichtungsmaterials zwischen der inneren Umfangsfläche der Ventilbohrung und den Lagerflächen verbleiben, desto größer wird ihre Viskosität. In der Praxis können die an gattungsgemäßen Schlitzventilen vorgesehenen Aktoren zum Schalten des Schlitzventils nach einer bestimmten Betriebsdauer keinen zuverlässigen Ventilschaltvorgang mehr bewirken, so dass die Verwendung der Beschichtungsanlage unterbrochen werden muss und die Ventilbohrung gereinigt werden muss.

### Aufgabe und Lösung

Aufgabe der Erfindung ist es, ein schaltbares Schlitzventil gattungsgemäßer Art dahingehend weiterzubilden, dass dieses über einen längeren Zeitraum wartungsfrei funktioniert.

Erfindungsgemäß wird dies dadurch erzielt, dass zum Zwecke der Aufnahme von Beschichtungsmaterial aus einem Lagerspalt zwischen den Lagerflächen und den inneren Umfangsflächen der Ventilbohrung mindestens ein Aufnahmeraum in die innere Umfangsfläche der Ventilbohrung zwischen dem Zufuhrkanal und dem Düsenkanal eingebracht ist.

Ein erfindungsgemäßes Schlitzventil weist die oben beschriebenen Merkmale gattungsgemäßer Schlitzventile auf. Bei dem Ventilgrundkörper handelt es sich vorzugsweise um einen metallischen Grundkörper, in den die Ventilbohrung insbesondere mit spanender Bearbeitung eingebracht ist. Bei der Ventilbohrung selbst handelt es sich um eine rotationssymmetrische und vorzugsweise zylindrische Ausnehmung, deren Länge mindestens vier Mal so groß wie der mittlere Radius ist. Die Ventilbohrung muss nicht zwingend eine zylindrische Form aufweisen, sondern kann beispielsweise auch konisch sein. In die Ventilbohrung mündet der Zufuhrkanal, und aus der Ventilbohrung geht der Düsenkanal ab, wobei beide Kanäle durch schlitzartige Öffnungen, die sich primär in Ventilerstreckungsrichtung erstrecken, mit der Ventilbohrung verbunden sind. Die absolute Länge der Ventilbohrung sowie die im Wesentlichen identische Breite des Zufuhrkanals und des Düsenkanals im Bereich der Umfangsfläche der Ventilbohrung sowie des Ventilkanals betragen mindestens 30 mm, vorzugsweise mindestens 100 mm. Je nach Anwendungszweck kann die Länge der Ventilbohrung bzw. die Breite der jeweiligen Kanäle bis zu 2.000 mm und mehr betragen. Der mittlere Durchmesser der Ventilbohrung, insbesondere der Durchmesser der zylindrischen Ventilbohrung, ist vorzugsweise < 30 mm. Die Breite der Einmündung des Zufuhrkanals und des Ausgangs in den Düsenkanal übersteigt beträgt vorzugsweise mindestens dem Vierfachen der Höhe der Einmündung bzw. des Ausgangs.

Der mindestens eine erfindungsgemäß vorgesehene Aufnahmeraum ist als Vertiefung im Bereich der Umfangsfläche der Ventilbohrung vorgesehen und erstreckt sich somit vom Lagerspalt und den außenseitigen Lagerflächen der Ventilsteuerstange nach außen. Während der Lagerspalt vorzugsweise eine mittlere Breite von weniger als 100 µm, insbesondere vorzugsweise von weniger als 50 µm, aufweist, ist er im Bereich des mindestens einen Aufnahmeraums durch die Tiefe des Aufnahmeraums vergrößert. Der Aufnahmeraum weist vorzugsweise eine Tiefe in Radialrichtung von mindestens 1 mm auf, vorzugsweise von mindestens 3 mm.

Durch den mindestens einen Aufnahmeraum ist an der inneren Umfangsfläche der Ventilbohrung zwischen den Öffnungen des Zufuhrkanals und des Düsenkanals wenigstens eine weitere Stelle vorgesehen, an der innere Umfangsfläche der Ventilbohrung unterbrochen ist. Dabei ist der Aufnahmeraum vorzugsweise durch eine sich in Ventilerstreckungsrichtung erstreckte Aufnahmenut gebildet, die die genannte Tiefe aufweist. Stattdessen können auch mehrere miteinander fluchtende oder in Umfangsrichtung versetzt zueinander angeordnete Aufnahmeräume an der inneren Umfangsfläche der Ventilbohrung vorgesehen sein. Bevorzugt ist es, wenn sich der eine Aufnahmeraum oder die Mehrzahl der Aufnahmeräume mindestens über eine Länge von 80 % der Länge der Lagerfläche in Ventilerstreckungsrichtung erstrecken, wobei als Lagerflächen in diesem Sinne nur jene Fläche angesehen werden, die zwischen den in Ventilerstreckungsrichtung einander gegenüberliegenden Enden des Ventilkanals vorgesehen sind.

Der mindestens eine Aufnahmeraum oder die Aufnahmeräume bewirken in der Praxis, dass das eingangs beschriebene Problem mit dem sich durch Scherung versteifenden Beschichtungsmaterial und die daraus resultierende Schwergängigkeit der Ventilsteuerstange nicht oder nicht in gleichem Maße einstellen. Der Aufnahmeraum oder die Aufnahmeräume gestatten es, zuvor stark auf Scherung beanspruchtes Beschichtungsmaterial aufzunehmen und es somit aus dem Lagerspalt zu entfernen.

Der Grund, warum das Vorhandensein des Aufnahmeraums die genannten Probleme verhindert oder vermindert, kann derzeit nicht eindeutig benannt werden. Ohne durch die nachfolgend noch genannten Überlegungen zur Wirksamkeit eingeschränkt zu werden, kann die Wirkungsweise der Erfindung zum Teil vermutlich dadurch erklärt werden, dass zuvor besonders stark auf Scherung beanspruchtes Beschichtungsmaterial in den Aufnahmeraum ausweichen kann. Die Wirkung könnte auch zum Teil dadurch erklärbar sein, dass insbesondere elastisches Beschichtungsmaterial, welches sich im Aufnahmeraum angesammelt hat, in der Durchlassstellung und der Schließstellung des Schlitzventils in verschiedenem Maße komprimiert und/oder druckbeschaufschlagt wird, so dass durch die in festem zeitlichem Takt stattfindende Entspannung des Beschichtungsmaterials im Aufnahmeraum auch Bewegung des Beschichtungsmaterials im Lagerspalt verursacht wird, wodurch zuvor stark auf Scherung beanspruchtes Beschichtungsmaterial zurück in den Strömungspfad des Beschichtungsmaterials gedrückt wird.

Es hat sich gezeigt, dass eine vorteilhafte Wirkung nahezu unabhängig davon erzielbar ist, wo der vorzugsweise als durchgehende Aufnahmenut ausgestaltete Aufnahmeraum am inneren Umfang der Ventilbohrung angeordnet ist. So umfasst die Erfindung Gestaltungen mit einem Aufnahmeraum, der unabhängig von der Ventilstellung stets nur mit dem Lagerspalt in kommunizierender Verbindung steht. Insbesondere auch umfasst sind jedoch Gestaltungen, bei denen mindestens einer der Aufnahmeräume in der Schließstellung oder der Durchlassstellung in kommunizierender Verbindung mit dem Kanaleinlass oder dem Kanalauslass der Ventilsteuerstange stehen. Bei diesen Gestaltungen ist der genannte positive Effekt vermutlich zumindest auch dadurch zu erklären, dass der Aufnahmeraum, der in der jeweils anderen Stellung des Schlitzventils beidseitig nur mit dem Lagerspalt in kommunizierender Verbindung steht, in der Schließstellung oder der Durchlassstellung unmittelbar mit dem Kanaleinlass oder Kanalauslass verbunden ist und somit von dem in der Durchlassstellung strömenden Beschichtungsmaterial gespült werden kann. Dies führt vermutlich dazu, dass zuvor stark auf Scherung belastete Teile des Beschichtungsmaterials wieder dem Strom des Beschichtungsmaterials zugefügt werden und somit ausgetragen werden.

Als besonders wirksam hat sich eine Gestaltung herausgestellt, bei der die Anordnung mindestens eines der Aufnahmeräume und die Ausgestaltung des Kanaleinlasses des Ventilkanals derart ausgebildet und aneinander angepasst sind, dass in der Schließstellung der Ventilsteuerstange eine kommunizierende Verbindung zwischen dem genannten Aufnahmeraum und dem Zufuhrkanal besteht. Gerade eine solche Konfiguration hat bei Versuchen dazu geführt, dass das erforderliche Moment zum Schalten des Ventils mit zunehmender Betriebsdauer nur in geringem Maße erhöht wird und somit ein langfristiger unterbrechungsfreier Betrieb der Beschichtungsanlage ermöglicht wird.

Um diese kommunizierende Verbindung insbesondere zwischen dem Zufuhrkanal und dem Aufnahmeraum zu ermöglichen, ist die Höhe des schlitzförmigen Kanaleinlasses an der Ventilsteuerstange in Umfangsrichtung vorzugsweise größer als die Höhe des schlitzförmigen Kanalauslasses an der Ventilsteuerstange. Der Ventilkanal weist somit vorzugsweise eine sich verjüngende Querschnittsfläche auf.

Die Erfindung betrifft weiterhin auch eine Beschichtungsanlage zum Beschichten von Oberflächen in einem kontinuierlichen Verfahren mit einem pastösen Beschichtungsmaterial. Diese Anlage umfasst dabei eine Zufuhreinrichtung zur Zuführung des Beschichtungsmaterials durch einen Zufuhrkanal, wobei diese Zufuhreinrichtung vorzugsweise ein unter Druck stehendes Pastenreservoir oder eine druckloses Pastenreservoir und eine Pumpvorrichtung umfasst. Weiterhin umfasst eine solche Beschichtungsanlage ein schaltbares Schlitzventil, ein sich an das Schlitzventil anschließenden Düsenkanal und eine sich an den Düsenkanal anschließende Schlitzdüse zur Ausbringung des Beschichtungsmaterials auf die damit zu beschichtende Oberfläche oder das damit zeitweise zu beschichtende Substrat. Das Schlitzventil ist dabei in oben geschilderter Weise ausgebildet.

Die Zufuhreinrichtung umfasst vorzugsweise ein Pastenreservoir, welches mit einem zur Herstellung von Batterien ausgebildeten Beschichtungsmaterial befüllt ist, also insbesondere einem Beschichtungsmaterial mit elektrochemisch aktiven Partikeln, die der Herstellung einer Elektrode dienen können.

Die Erfindung betrifft weiterhin auch ein Verfahren zur Beschichtung einer Oberfläche, bei dem die beschriebene Beschichtungsanlage Verwendung findet. Es handelt sich vorzugsweise um ein Verfahren zur Abgabe eines eine Batterieelektrode bildenden Beschichtungsmaterials.

### Kurzbeschreibung der Zeichnungen

Weitere Aspekte und Vorteile der Erfindung ergeben sich außer aus den Ansprüchen auch aus der nachfolgenden Beschreibung eines bevorzugten Ausführungsbeispiels der Erfindung, welches anhand der Darstellungen erläutert wird. Dabei zeigen:
- Fig. 1: eine erfindungsgemäße Beschichtungsanlage in einer geschnittenen Darstellung und
- Fig. 2a, 2b: das Schlitzventil der Beschichtungsanlage der Fig. 1 in geschnittener Seitendarstellung im Durchlasszustand und im Schließzustand.

### Detaillierte Beschreibung des Ausführungsbeispiels

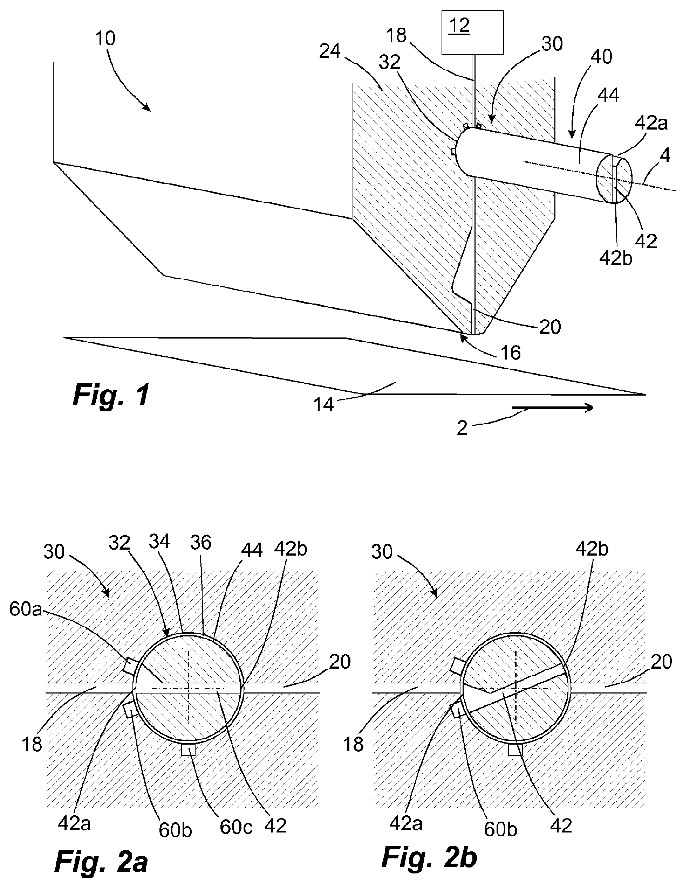

Fig. 1 zeigt in einer geschnittenen schematischen Darstellung eine erfindungsgemäße Beschichtungsanlage 10.

Diese Beschichtungsanlage 10 dient zum Ausbringen eines Beschichtungsmaterials, welches vor dem Ausbringen in einem Pastenreservoir 12 gelagert ist. Das Beschichtungsmaterial wird bestimmungsgemäß auf einem Substrat 14 aufgebracht, welches in Richtung des Pfeils 2 kontinuierlich an der Beschichtungsanlage 10 vorbei geführt wird. Zum Ausbringen des Beschichtungsmaterials verfügt die Beschichtungsanlage 10 über eine schlitzförmige Ausbringungsdüse 16, die vorliegend eine Breite von 300 mm aufweist. Je nach Anwendungszweck sind hier Breiten zwischen 30 mm und 2000 mm und darüber hinaus möglich.

Zwischen dem Pastenreservoir 12 und der Schlitzdüse 16 ist ein schaltbares Schlitzventil 30 vorgesehen. Dieses wird primär durch eine im Wesentlichen zylindrische Ventilbohrung 32 in einem Grundkörper 24 sowie eine in diese Ventilbohrung 32 eingesetzte Ventilsteuerstange 40 gebildet.

Die Ventilsteuerstange 40 kann durch einen nicht dargestellten Aktor, wie einen Elektromotor, einen Hydraulikaktor oder einem Pneumatikaktor, um eine in Ventilerstreckungsrichtung ausgerichtete Ventilachse 4 gedreht werden. Hierdurch kann das Schlitzventil 30 wahlweise eine in Fig. 2a dargestellte Durchlassstellung oder eine in Fig. 2b dargestellte Schließstellung einnehmen. Hierzu ist vorgesehen, dass gemeinsam mit der Ventilsteuerstange 40 ein die Ventilsteuerstange 40 durchsetzender Ventilkanal 42 gedreht wird. Dieser kann somit gegenüber einem vom Pastenreservoir 18 zur Ventilbohrung 32 führenden Zufuhrkanal 18 und einem von der Ventilbohrung 32 zur Schlitzdüse 16 führenden Düsenkanal 20 in kommunizierender Verbindung gebracht werden.

Fig. 2a zeigt den Durchlasszustand, in dem der Kanaleinlass 42a mit dem Zufuhrkanal 18 fluchtet, während der Kanalauslass 42b mit dem Düsenkanal 20 fluchtet. Das pastöse Beschichtungsmaterial kann somit ungehindert vom Pastenreservoir 12 zur Schlitzdüse 16 gelangen.

In der Schließstellung der Fig. 2b dagegen fluchtet der Kanalauslass 42b nicht mehr mit dem Düsenkanal 20, so dass die Zufuhr von Beschichtungsmaterial zum Düsenkanal 20 und der Düse 16 unterbrochen ist.

Wie den Figuren 2a und 2b zu entnehmen ist, verbleibt zwischen einer zylindrischen außenseitigen Lagerfläche 44 der Ventilsteuerstange 40 und der inneren Umfangsfläche 34 der Ventilbohrung 32 ein schmaler Lagerspalt 36. Dieser ist in den Darstellungen zur Verdeutlichen größer dargestellt, als er in der Realität ist. Obwohl der Lagerspalt 36 üblicherweise eine Breite von 20 µm bis 30 µm nicht übersteigt, kann nicht verhindert werden, dass Beschichtungsmaterial in diesen Lagerspalt 36 gelangt.

Beschichtungsmaterial, welches beispielsweise als Elektrodenmaterial bei der Batterieherstellung Verwendung findet und bestimmungsgemäß mit der Beschichtungsanlage 10 auf das Substrat 14 ausgetragen wird, hat je nach Ausgestaltung die Neigung, bei Scherung eine deutliche Steigerung der Viskosität zu erfahren. Dabei ist die Scherung insbesondere im Lagerspalt 36 sehr hoch, da hier der Abstand zwischen den Lagerflächen 44 und der inneren Umfangsfläche 34 der Ventilbohrung 32 sehr gering ist. Das im Lagerspalt 36 angeordnete Beschichtungsmaterial droht daher ein Festklemmen der Ventilsteuerstange 40 zu verursachen, welches erst durch Reinigen der Ventilbohrung 32 beseitigt werden kann.

Um diesen Effekt nicht eintreten zu lassen oder zu vermindern, sind an der inneren Umfangsfläche 34 der Ventilbohrung insgesamt drei sich vorzugsweise über die annähernd gesamte Länge (>80%) der Ventilsteuerstange 40 sich in Ventilerstreckungsrichtung 4 erstreckende nutartige Aufnahmeräume 60a, 60b, 60c vorgesehen. Diese Aufnahmeräume 60a, 60b, 60c sind mit dem Zufuhrkanal 18 bzw. dem Düsenkanal 20 lediglich über die Ventilbohrung 32 verbunden. Durch die Ventilsteuerstange 40 sind sie zumindest phasenweise gegenüber dem Zufuhrkanal 18 und dem Düsenkanal 20 isoliert. Wie der Vergleich der Figuren 2a und 2b verdeutlicht, ist der Aufnahmeraum 60a in der Durchlassstellung des Schlitzventils 30 mit dem Ventileinlass verbunden, wobei dies über eine trichterartige Aufweitung des Kanaleinlasses 42a am Eingang des Ventilkanals 42 erreicht wird. Gleichzeitig sind in der Durchlassstellung der Fig. 2a die Aufnahmeräume 60b, 60c gegenüber dem Zufuhrkanal 18, dem Ventilkanal 42 und dem Düsenkanal 20 isoliert.

Im Schließzustand der Fig. 2b ist lediglich der Aufnahmeraum 60b in kommunizierender Verbindung mit dem Ventilkanal 42 und dem Zufuhrkanal 18, während die Aufnahmeräume 60a, 60c gegenüber dem Zufuhrkanal 18 isoliert sind.

Das Vorhandensein der Aufnahmeräume 60a, 60b, 60c führt zu einer deutlichen Verminderung der Steigerung der Schwergängigkeit bei längerer störungsfreier Betriebsdauer. Dabei sind die drei Aufnahmeräume 60a, 60b, 60c nur zum Zwecke der Veranschaulichung in einem gemeinsamen Ausführungsbeispiel realisiert. Ein jeder dieser Aufnahmeräume könnte auch als einziger Aufnahmeraum vorgesehen sein und würde zu einer Verringerung der genannten Schwergängigkeit führen.

Die Aufnahmeräume 60a, 60b, 60c dienen allesamt der Aufnahme von durch den Lagerspalt 36 zugeführtem Beschichtungsmaterial. Während der Aufnahmeraum 60c unabhängig von der Stellung der Ventilsteuerstange stets nur über den Lagerspalt 36 mit dem Zufuhrkanal 18 in kommunizierender Verbindung steht, sind die Aufnahmeräume 60a und 60b fallweise mit dem Ventilkanal 42 verbunden. Dies bewirkt einen Spülvorgang, durch den zuvor in den jeweiligen Aufnahmeraum gelangtes und besonders stark auf Scherung beanspruchtes Beschichtungsmaterial aus dem jeweiligen Aufnahmeraum 60a, 60b wieder herausgedrückt bzw. herausgespült wird und dem Düsenkanal 20 zugeführt wird.

Als besonders vorteilhaft hat sich eine Anordnung des Aufnahmeraums entsprechend dem Aufnahmeraum 60b herausgestellt, also eine Anordnung des Aufnahmeraums 60b derart, dass dieser in der Schließstellung des Schlitzventils 30 kommunizierend mit dem Ventilkanal 42 in Verbindung steht.

## Patentansprüche

1. Schaltbares Schlitzventil (30) für eine Beschichtungsanlage (10) zur Steuerung der Abgabe eines pastösen Beschichtungsmaterials mit
- einer in einen Ventilgrundkörper (24) eingebrachten und in einer Ventilerstreckungsrichtung (4) ausgerichteten Ventilbohrung (32),
- einem im Bereich einer inneren Umfangsfläche (34) der Ventilbohrung (32) angeordneten und in die Ventilbohrung (32) einmündenden Zufuhrkanal (18),
- einem im Bereich der inneren Umfangsfläche (34) der Ventilbohrung (32) angeordneten und aus der Ventilbohrung (32) herausführenden Düsenkanal (20) und
- einer in der Ventilbohrung (32) angeordneten Ventilsteuerstange (40), die um eine in Ventilerstreckungsrichtung (4) erstreckte drehbare Drehachse (4) drehbar in der Ventilbohrung (32) gelagert ist und von einem Ventilkanal (42) durchsetzt ist, der über einen schlitzförmigen Kanaleinlass (42a) und einen schlitzförmigen Kanalauslass (42b) verfügt,
wobei
- die Ventilsteuerstange (40) in der Ventilbohrung (32) zwischen einer Durchlassstellung und einer Schließstellung drehbar ist, wobei in der Durchlassstellung der Zufuhrkanal (18) und der Düsenkanal (20) über den Ventilkanal (42) kommunizierend verbunden sind und wobei in der Schließstellung der Düsenkanal (20) vom Zufuhrkanal (18) durch die Ventilsteuerstange (40) isoliert ist, und
- die Ventilsteuerstange (40) außenseitige Lagerflächen (44) aufweist, die im Bereich von Teilumfängen der Ventilsteuerstange (40) zwischen dem Kanaleinlass (42a) und dem Kanalauslass (42b) zum Zwecke der Lagerung an der inneren Umfangsfläche (34) der Ventilbohrung (32) anliegen, **dadurch gekennzeichnet, dass**
- zur Aufnahme von Beschichtungsmaterial in die innere Umfangsfläche (34) der Ventilbohrung (32) zwischen dem Zufuhrkanal (18) und dem Düsenkanal (20) mindestens ein Aufnahmeraum (60a, 60b, 60c) eingebracht ist.

2. Schaltbares Schlitzventil (30) nach Anspruch 1,
**dadurch gekennzeichnet, dass**
der mindestens eine Aufnahmeraum (60a, 60b, 60c) als in Ventilerstreckungsrichtung (4) erstreckte Aufnahmenut (60a, 60b, 60c) ausgebildet ist.

3. Schaltbares Schlitzventil 830) nach Anspruch 1 oder 2,
**dadurch gekennzeichnet, dass**
der Aufnahmeraum oder die Aufnahmeräume (60a, 60b, 60c) sich mindestens über eine Länge von 80% der Länge der Lagerfläche (44) in Ventilerstreckungsrichtung (4) erstrecken.

4. Schaltbares Schlitzventil (30) nach einem der vorstehenden Ansprüche,
**dadurch gekennzeichnet, dass**
die Anordnung mindestens eines der Aufnahmeräume (60b) und die Ausgestaltung des Kanaleinlasses (42a) des Ventilkanals (42) derart ausgebildet und aneinander angepasst sind, dass in der Schließstellung der Ventilsteuerstange (40) eine kommunizierende Verbindung zwischen diesem Aufnahmeraum (60b) und dem Zufuhrkanal (18) bestehen.

5. Schaltbares Schlitzventil (30) nach einem der vorstehenden Ansprüche,
**dadurch gekennzeichnet, dass**
die Höhe des schlitzförmigen Kanaleinlasses (42a) an der Ventilsteuerstange (40) in Umfangsrichtung größer ist als die Höhe des schlitzförmigen Kanalauslasses (42b) an der Ventilsteuerstange (40).

6. Beschichtungsanlage (10) zum Beschichten von Oberflächen (14) in einem kontinuierlichen Verfahren mit einem pastösen Beschichtungsmaterial, umfassend
- eine Zufuhreinrichtung (12, 18) zur Zuführung des Beschichtungsmaterials durch einen Zufuhrkanal (18),
- ein sich an den Zufuhrkanal (18) anschließendes schaltbares Schlitzventil (30),
- ein sich an das Schlitzventil (30) anschließenden Düsenkanal (20) und
- eine sich an den Düsenkanal (20) anschließende Schlitzdüse (16) zur Ausbringung des Beschichtungsmaterials auf die damit zu beschichtende Oberfläche (14),
**dadurch gekennzeichnet, dass**
- das Schlitzventil (30) nach einem der vorstehenden Ansprüche ausgebildet ist.

7. Beschichtungsanlage nach Anspruch 6,
**dadurch gekennzeichnet, dass**
die Zufuhreinrichtung einen Pastenspeicher (12) umfasst, in dem Beschichtungsmaterial zur Herstellung von Batterien vorgehalten wird.

8. Verfahren zur Ausbringung eines Beschichtungsmaterials auf einer Oberfläche,
**dadurch gekennzeichnet, dass**
das Beschichtungsmaterial mittels einer Beschichtungsanlage (10) nach einem der Ansprüche 6 oder 7 ausgebracht wird.

## Claims

1. Switchable slot valve (30) for a coating plant (10) for controlling the delivery of a pasty coating material, having
- a valve bore (32) which is incorporated in a valve main body (24) and is aligned in a valve extent direction (4),
- a supply duct (18) which is disposed in the region of an inner circumferential face (34) of the valve bore (32) and opens into the valve bore (32),
- a nozzle duct (20) which is disposed in the region of the inner circumferential face (34) of the valve bore (32) and leads out of the valve bore (32), and
- a valve control rod (40) which is disposed in the valve bore (32) and which is mounted in the valve bore (32) so as to be rotatable about a rotatable rotation axis (4) which extends in the valve extent direction (4) and is penetrated by a valve duct (42) which disposes of a slot-shaped duct inlet (42a) and a slot-shaped duct outlet (42b),
wherein
- the valve control rod (40) in the valve bore (32) is rotatable between a throughput position and a closed position, wherein in the throughput position the supply duct (18) and the nozzle duct (20) are interconnected so as to communicate via the valve duct (42), and wherein in the closed position the nozzle duct (20) is isolated from the supply duct (18) by the valve control rod (40), and
- the valve control rod (40) has external bearing faces (44) which for the purpose of mounting in the region of part-circumferences of the valve control rod (40) between the duct inlet (42a) and the duct outlet (42b) bear on the inner circumferential face (34) of the valve bore (32),
**characterized in that**
- for receiving coating material at least one receiving space (60a, 60b, 60c) is incorporated in the inner circumferential face (34) of the valve bore (32) between the supply duct (18) and the nozzle duct (20).

2. Switchable slot valve (30) according to Claim 1, **characterized in that**
the at least one receiving space (60a, 60b, 60c) is configured as a receiving groove (60a, 60b, 60c) extending in the valve extent direction (4).

3. Switchable slot valve (30) according to claim 1 or 2,
**characterized in that**
the receiving space or the receiving spaces (60a, 60b, 60c) extend across at least a length of 80% of the length of the bearing face (44) in the valve extent direction (4).

4. Switchable slot valve (30) according to one of the preceding claims,
**characterized in that**
the arrangement of at least one of the receiving spaces (60b) and the design of the duct inlet (42a) of the valve duct (42) are configured and mutually adapted in such a manner that in the closed position of the valve control rod (40) a communicative connection exists between this receiving space (60b) and the supply duct (18).

5. Switchable slot valve (30) according to one of the preceding claims,
**characterized in that**
the height of the slot-shaped duct inlet (42a) on the valve control rod (40) in the circumferential direction is larger than the height of the slot-shaped duct outlet (42b) on the valve control rod (40).

6. Coating plant (10) for coating surfaces (14) with a pasty coating material in a continuous method, comprising
- a supply unit (12, 18) for supplying the coating material by way of a supply duct (18),
- a switchable slot valve (30) which is downstream of the supply duct (18),
- a nozzle duct (20) which is downstream of the slot valve (30), and
- a slot nozzle (16) which is downstream of the nozzle duct (20), for deploying the coating material onto the surface (14) to be coated therewith,
**characterized in that**
- the slot valve (30) is configured according to one of the preceding claims.

7. Coating plant according to Claim 6, **characterized in that**
the supply unit comprises a paste reservoir (12) in which coating material for the manufacture of batteries is held ready.

8. Method for deploying a coating material on a surface,
**characterized in that**
the coating material is deployed by means of a coating plant (10) according to one of Claims 6 or 7.

## Revendications

1. Valve à fente commutable (30) pour une installation de revêtement (10) pour la commande de la distribution d'un matériau de revêtement pâteux, comprenant
- un alésage de valve (32) réalisé dans un corps de base de valve (24) et orienté dans une direction d'étendue de la valve (4),
- un canal d'alimentation (18) disposé dans la région d'une surface périphérique intérieure (34) de l'alésage de valve (32) et débouchant dans l'alésage de valve (32),
- un canal de buse (20) disposé dans la région de la surface périphérique intérieure (34) de l'alésage de valve (32) et conduisant hors de l'alésage de valve (32) et
- une tige de commande de valve (40) disposée dans l'alésage de valve (32), qui est supportée dans l'alésage de valve (32) de manière à pouvoir tourner autour d'un axe de rotation rotatif (4) s'étendant dans la direction d'étendue de la valve (4) et qui est traversée par un canal de valve (42) qui dispose d'une entrée de canal en forme de fente (42a) et d'une sortie de canal en forme de fente (42b),
- la tige de commande de valve (40) pouvant tourner dans l'alésage de valve (32) entre une position de passage et une position de fermeture, le canal d'alimentation (18) et le canal de buse (20), dans la position de passage, étant connectés de manière à communiquer par le biais du canal de valve (42) et le canal de buse (20), dans la position de fermeture, étant isolé du canal d'alimentation (18) par la tige de commande de valve (40), et
- la tige de commande de valve (40) présentant des surfaces d'appui (44) du côté extérieur, lesquelles s'appliquent contre la surface périphérique intérieure (34) de l'alésage de valve (32), dans la région de périphéries partielles de la tige de commande de valve (40) entre l'entrée de canal (42a) et la sortie de canal (42b) dans le but d'assurer l'appui,
**caractérisée en ce**
- **qu'**au moins un espace de réception (60a, 60b, 60c) est réalisé dans la surface périphérique intérieure (34) de l'alésage de valve (32) entre le canal d'alimentation (18) et le canal de buse (20) pour recevoir du matériau de revêtement.

2. Valve à fente commutable (30) selon la revendication 1,
**caractérisée en ce que**
l'au moins un espace de réception (60a, 60b, 60c) est réalisé sous forme de rainure de réception (60a, 60b, 60c) s'étendant dans la direction d'étendue de la valve (4).

3. Valve à fente commutable (30) selon la revendication 1 ou 2,
**caractérisée en ce que**
l'espace de réception ou les espaces de réception (60a, 60b, 60c) s'étendent au moins sur une longueur de 80 % de la longueur de la surface d'appui (44) dans la direction d'étendue de la valve (4).

4. Valve à fente commutable (30) selon l'une quelconque des revendications précédentes, **caractérisée en ce que**
l'agencement d'au moins l'un des espaces de réception (60b) et la configuration de l'entrée de canal (42a) du canal de valve (42) sont réalisés et adaptés l'un à l'autre de telle sorte que dans la position de fermeture de la tige de commande de valve (40), une liaison de communication existe entre cet espace de réception (60b) et le canal d'alimentation (18).

5. Valve à fente commutable (30) selon l'une quelconque des revendications précédentes, **caractérisée en ce que**
la hauteur de l'entrée de canal en forme de fente (42a) au niveau de la tige de commande de valve (40) dans la direction périphérique est supérieure à la hauteur de la sortie de canal en forme de fente (42b) au niveau de la tige de commande de valve (40).

6. Installation de revêtement pour le revêtement de surfaces (14) dans un procédé continu avec un matériau de revêtement pâteux, comprenant
- un dispositif d'alimentation (12, 18) pour l'alimentation en matériau de revêtement à travers un canal d'alimentation (18),
- une valve à fente commutable (30) se raccordant au canal d'alimentation (18),
- un canal de buse (20) se raccordant à la valve à fente (30) et
- une buse à fente (16) se raccordant au canal de buse (20) pour distribuer le matériau de revêtement sur la surface (14) devant être revêtue avec celui-ci,
**caractérisée en ce que**
- la valve à fente (30) est réalisée selon l'une quelconque des revendications précédentes.

7. Installation de revêtement selon la revendication 6,
**caractérisée en ce que**
le dispositif d'alimentation comprend un dispositif de stockage de pâte (12) dans lequel est conservé du matériau de revêtement pour la fabrication de batteries.

8. Procédé de distribution d'un matériau de revêtement sur une surface,
**caractérisé en ce que**
le matériau de revêtement est distribué au moyen d'une installation de revêtement (10) selon l'une quelconque des revendications 6 ou 7.
